# EUROPÄISCHE PATENTSCHRIFT

(11) **EP 0 566 843 B1**
(45) Veröffentlichungstag und Bekanntmachung des Hinweises auf die Patenterteilung: **19.07.1995**
(21) Anmeldenummer: 93103379.9
(22) Anmeldetag: 04.03.1993
(51) Int. Cl.: B60R 9/06

(54) **Lastenträger für Fahrzeuge**
Luggage-carrier for vehicles
Porte-bagages pour véhicules

(30) Priorität: 22.04.1992 DE 4213216
(43) Veröffentlichungstag der Anmeldung: 27.10.1993
(73) Patentinhaber: MERCEDES-BENZ AG, 70327 Stuttgart (DE)
(72) Erfinder: Eipper, Konrad, Dipl.-Ing., W-7403 Ammerbuch 1 (DE); Böttcher, Lothar, W-7037 Magstadt (DE)

(56) Entgegenhaltungen:
- US-A- 3 921 842
- US-A- 4 646 952
- US-A- 4 951 991

## Beschreibung

Die Erfindung betrifft einen Lastenträger für Fahrzeuge nach dem Oberbegriff von Anspruch 1, wie er beispielsweise aus der DE-A-3 717 986 als bekannt hervorgeht.

Darin wird ein zusammenlegbarer karosserieunabhängiger Gepäckträger für PKW beschrieben. Durch diesen Gepäckträger können sperrige Güter, wie beispielsweise Fahrräder im Heckbereich des PKW's mitgeführt werden. Ein Nachteil des Gepäckträgers ist es, daß er nur bei Fahrzeugen mit abgestuftem Fahrzeugheck, also nicht bei Kombis, verwendet werden kann. Ferner muß er bei Nichtgebrauch entweder montiert mitgeführt werden oder demontiert im Kofferraum verstaut werden. In montiertem Zustand behindert er aber den Zugang zum Kofferraum und bei der Mitnahme im Kofferraum beansprucht er ein erhebliches Stauvolumen.

Aus dem DE-U-76 30 191 geht ein an Fahrzeugen befestigbarer Lastenträger hervor, der im Bedarfsfall durch Einschieben in zwei an dem Unterboden des Fahrzeugs fest angeordnete hohle Rohre in Gebrauchsstellung an dem Heck des Fahrzeugs, mittels jeweils ein Rohr und das darin eingesteckte Trägerende durchsetzende Schrauben befestigt wird. Auch dieser Lastenträger beansprucht bei Nichtgebrauch ein erhebliches Stauvolumen zum Transportieren.

Desweiteren geht aus der US-A-5 050 785 ein Fahrradträger für Einrad-Hänger hervor, bei dem der Fahrradträger sowohl in ver tikaler Richtung als auch in horizontaler Richtung verschiebbar befestigt ist. Der Fahrradträger wird fest mit dem Einradhänger beziehungsweise mit dem den Einradhänger am Fahrzeug befestigten Gestänge verbunden.

Aufgabe der Erfindung ist es, einen Lastenträger für Fahrzeuge zu konstruieren, der ohne Stauraumbedarf mit dem Fahrzeug mitgeführt werden kann und im Bedarfsfall ohne Montagearbeiten schnell verfügbar ist.

Diese Aufgabe wird bei Zugrundelegung des gattungsgemäßen Lastenträgers erfindungsgemäß durch die kennzeichnenden Merkmalen von Anspruch 1 gelöst.

Der Lastenträger ist zusammenklappbar und kann unterhalb des Heckbodens des Fahrzeugs verstaut werden, solange er nicht benötigt wird. Im Bedarfsfall ist er dann durch einfaches Herausziehen und aufklappen in einfacher Weise schnell verfügbar.

Zweckmäßige Ausgestaltungen der Erfindung können den Unteransprüchen entnommen werden. Im übrigen ist die Erfindung an hand eines in den Zeichnungen dargestellten Ausführungsbeispieles nachfolgend noch erläutert; dabei zeigen zeigen:
- Fig. 1:: den Lastenträger in beiden Endlagen und in einer Zwischenstellung,
- Fig. 2:: eine Detailansicht einer Gleitführung an der Querstrebe und eines angeschlagenen Trägers,
- Fig. 3:: die Ausführung des Lastenträgers als Fahrradträger und
- Fig. 4:: einen Fahrradträger in Gebrauchsstellung.

Am Fahrzeugheck 1 sind in Längsrichtung verlaufende Hohlrohre 4 angebracht. Es kann zweckmäßig sein, die Anbringung der Hohlrohre 4 an den Längsträgern des Fahrzeugs vorzunehmen um an genügend stabilen Lastaufnahmepunkten der Karosserie anzugreifen. Andernfalls kann es notwendig sein den Anbringungsbereich zu verstärken.In diesen Hohlrohren 4 sind um ein bestimmtes Maß verschiebbare Träger 3, die am Ende abgekröpft und um die Hohlrohrachse drehbar sind, gelagert. Sowohl die Verschiebestellung als auch die Schwenkstellung ist fixierbar. An den freien Enden 7 der Träger 3 ist eine zumindest bereichsweise geradlinig ausgebildete Querstrebe 2 verschiebbar und verschwenkbar angelenkt. Der Lastenträger kann aus der Ruhestellung 5 heraus in eine Gebrauchsstellung 6 gebracht werden. In der Ruhestellung 5 sind die Trägerenden 7 in die durch die Halterohre 4 definierte Ebene geschwenkt, so daß die Stirnseiten der Trägerenden 7 einander zugewandt sind und die Träger 3 so in die Halterohre hineingeschoben, daß die Hinterkante des Lastenträgers nicht mehr über das hintere Ende des Fahrzeugs hinausragt. Mit dieser Ruhestellung 5 wird die Möglichkeit geschaffen, den Lastenträger mitzuführen, ohne daß er Stauraum im Fahrzeug beansprucht und ohne den Zugang zum Fahrzeug zu behindern. Er ist auch leicht in Gebrauchsstellung 6 zu bringen. Durch Herausziehen der Träger 3, die dann über das Heck 1 hinausragen und nach oben Schwenken der abgekröpften Trägerenden 7 und durch das Fixieren der erreichten Stellung wird die Gebrauchsstellung 6 erreicht.

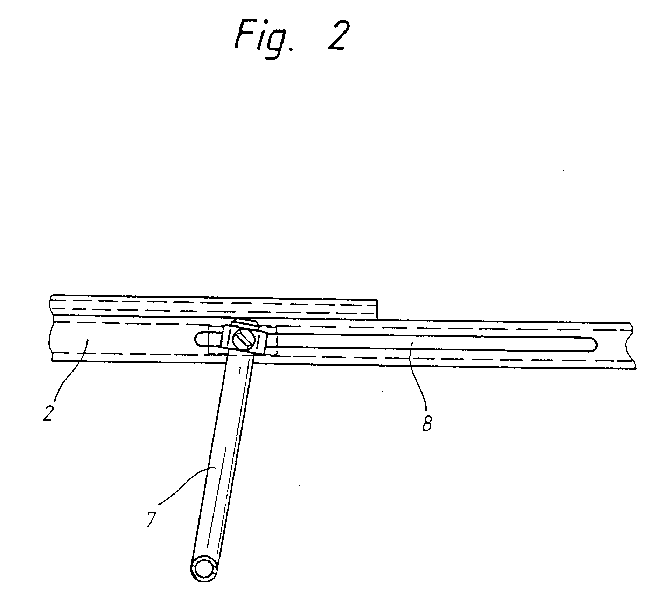

In Fig 2 ist ein Detail der Querstrebe 2 dargestellt. Während des Verschwenkens des Trägers 3 gleitet die Anlenkung der Querstrebe 2 in der Gleitführung 8. Die Anbringung der Last erfolgt auf der Querstrebe 2.

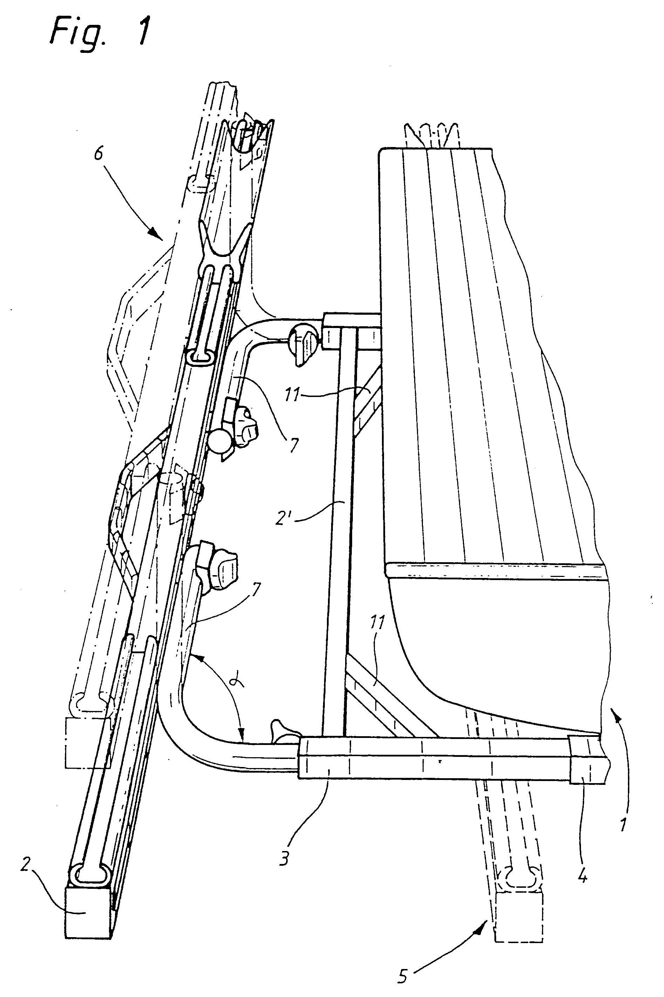

Soll eine größere Stabilität erreicht werden, so kann die Anzahl der Querstreben und der Träger erhöht werden. In Fig 1 ist eine zusätzliche Querstrebe 2' zwischen den Trägern angebracht, die mit Dreiecksstreben 11 an den Trägern 3 abgestützt ist um eine höhere Biegesteifigkeit zu erzielen. Dann ist es allerdings notwendig, den Träger 3 in zwei gegeneinander verdrehbare aber nicht längsverschiebbare Teilstücke (9,10) zu unterteilen, wobei das dem Heck zugewandte Trägerteil 9 in den Halterohren 4 verschiebbar gelagert ist. Am freien Ende des Trägerteils 9 ist das gekröpfte Trägerende 10 verdrehbar angebracht.

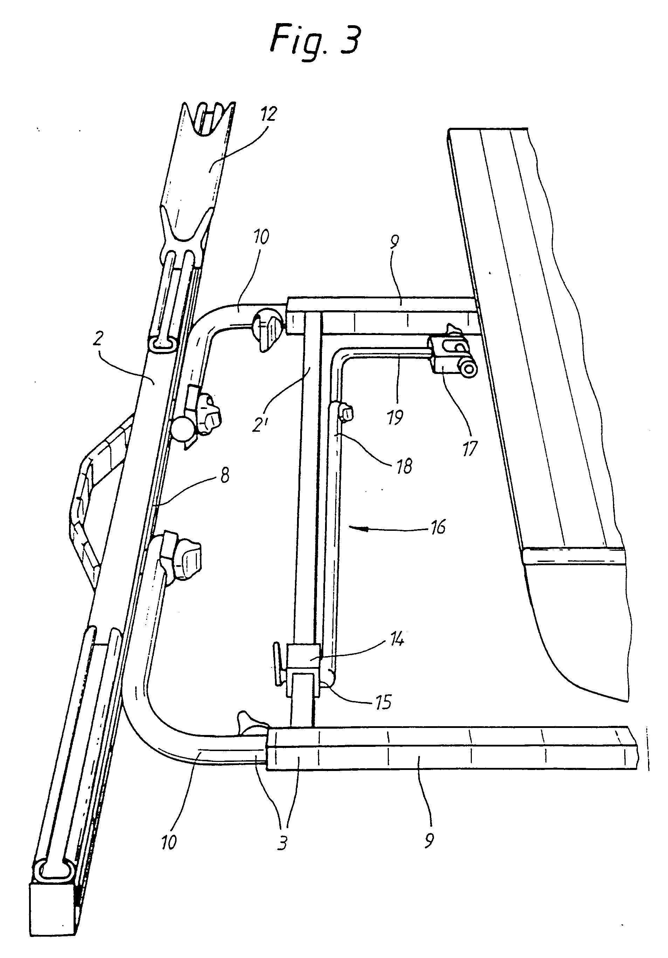

Zum Transport von Zweirädern, die quer zur Fahrtrichtung befestigt werden, können, wie in Fig. 3 dargestellt, auf die Querstrebe 2 zum Halten von Rädern geeignete Halteelemente 12 angebracht werden. Um einen zusätzlichen Haltepunkt im oberen Bereich des Zweiradrahmen einzurichten, ist der zusätzlichen Querstrebe 2' eine weitere Funktion zugewiesen. Auf dieser Querstrebe 2' ist ein in Längsrichtung verschiebbarer Gleitstein 14 in verschiedenen Verschiebestellungen arretierbar gelagert. An diesem Gleitstein 14 ist über ein Drehgelenk 15 der lange Schenkel einer L-förmigen Versteifungsstange 16 angelenkt. Am freien Ende des kurzen Schenkels 19 befindet sich eine Halteklemme 17, die im oberen Bereich des Zweiradrahmens ein Rahmenrohr klemmend halten kann. Die Halteklemme 17 ist dabei um eine in Richtung des kurzen Schenkels der L-förmigen Stange verlaufende Achse drehbar. Wenn man den langen Schenkel 18 nach Art eines Teleskops ausziehbar ausbildet, so ist es möglich, die Versteifungsstange so auszugestalten, daß sie zusammengeschoben und, wie in der Fig. 3 dargestellt, in Ruhestellung ganz in die Ebene der Träger 3 verschwenkt werden kann, so daß die Einbauhöhe des Lastenträgers gering bleibt. Aus diesen Grund und wegen der größeren Flexibilität des Lastenträgers sind auch die Halteelemente 12 abnehmbar angebracht.

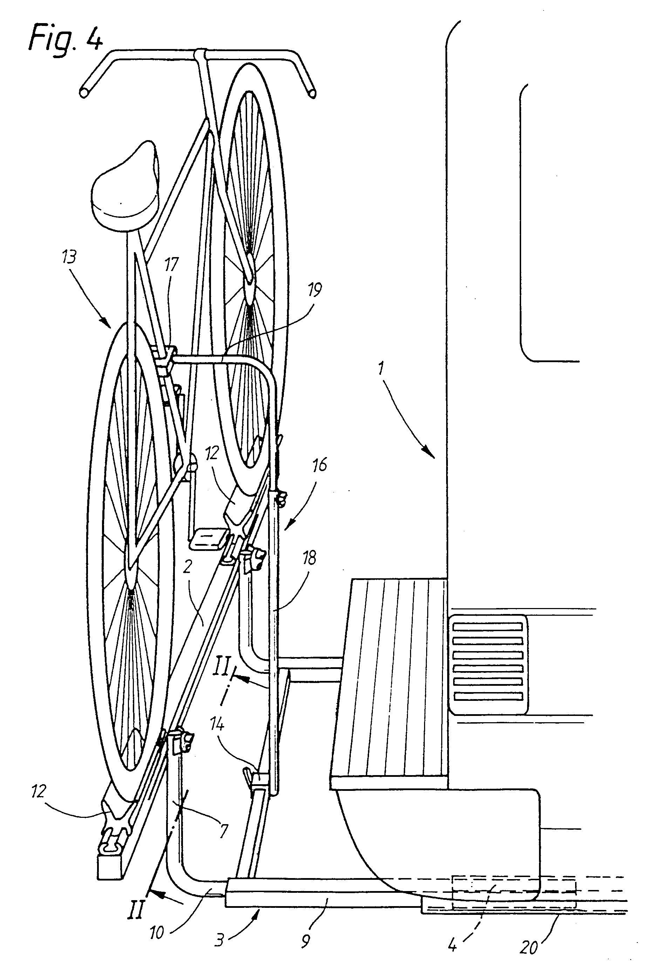

Fig. 4 zeigt den Lastenträger an einem Fahrzeug und in der Verwendung als Fahrradträger. Das Fahrrad 13 steht in den Halteelementen 12 auf der Querstrebe 2 auf und ist dort befestigt. Die Halteklemme 17 Hält das Fahrrad 13 am Rahmen. Es ist vorteilhaft, die Halteklemme 17 in Längsrichtung im Bereich des Schwerpunkts des Fahrrades anzubringen. Unterhalb des Fahrzeughecks 1 ist ein wannenförmiger Spritzschutz 20 angebracht, der den Lastenträger in Ruhestellung vor Verschmutzung durch Spritzwasser und Straßenschmutz und vor Beschädigung durch Steinschlag schützt.

Zum Befördern von mehreren Skiern in vertikaler Stellung kann ein geeigneter Skiträger an der Querstrebe 2 aufgestellt und befestigt werden, der mittels der Versteifungsstange 16 in der aufgerichteten Stellung stabilisiert werden kann.

## Patentansprüche

1. Lastenträger für Fahrzeuge, zum Transport sperriger Güter, der am Heck (1) des Fahrzeuges befestigt ist und der aus zumindest zwei mit zumindest einer Querstrebe (2) verbundenen Trägern (3) gebildet wird, die Querstrebe (2) mit Mitteln zur Befestigung der Traglast versehen ist und wobei die Träger (3) in am Heck (1) des Fahrzeugs in Längsrichtung verlaufenden Halterohren (4) eingesteckt sind,
**gekennzeichnet durch**
die Gemeinsamkeit folgender Merkmale:
- die im Endbereich abgewinkelten Träger (3) sind in den Halterohren (4) um ein definiertes Maß in Längsrichtung zwischen zwei verschiedenen Endlagen - einer unter dem Fahrzeug befindlichen Ruhestellung (5) und einer über das Heck (1) hinausragenden Gebrauchsstellung (6) - verschiebbar, in den Endlagen fixierbar und jeweils um die Halterohrachse ebenfalls zwischen zwei verschiedenen Endlagen drehbar gelagert,
- die abgewinkelten Enden (7) der Träger (3) sind verschwenkbar an der Querstrebe (2) angelenkt,
- die Träger (3) ragen in ausgezogenem Zustand - Gebrauchsstellung (6) - über das Heck (1) des Fahrzeugs hinaus und sind mit ihrem abgewinkelten Ende (7) nach oben geschwenkt,
- in Ruhestellung (5) sind die Träger (3) mit ihren Trägerenden (7) in die durch die Halterohre (4) definierte Ebene geschwenkt und die Träger so weit in die Halterohre (4) hineingeschoben, daß die Hinterkante des Lastenträgers bündig mit oder vor dem hinteren Ende des Fahrzeugs liegt.

2. Lastenträger nach Anspruch 1,
**dadurch gekennzeichnet,**
daß der Kröpfungswinkel (α) des Trägers (3) 90° beträgt.

3. Lastenträger nach Anspruch 2,
**dadurch gekennzeichnet,**
daß jeder Träger (3) aus zwei ineinandergesteckten,zueinander verdrehbaren und axial zueinander fixierten Trägerteilen (9,10) besteht, wobei die außenliegenden Trägerteile (9) in dem Halterohr (4) verschiebbar und an ihrem rückwärtigen Ende durch eine zweite Querstrebe (2') gegeneinander ausgesteift sind.

4. Lastenträger nach Anspruch 3,
**dadurch gekennzeichnet,**
daß die zweite Querstrebe (2') an beiden Enden zusätzlich durch jeweils eine mit der Querstrebe (2') bzw dem zugehörigen äußeren Trägerteil (9) verbundene Dreiecksstrebe (11) ausgesteift ist.

5. Lastenträger nach Anspruch 3,
**dadurch gekennzeichnet,**
daß an der Querstrebe (2) eine Haltevorrichtung (12) für zumindest ein Zweirad (13) angebracht ist, durch die das Zweirad (13) quer zur Fahrtrichtung des Fahrzeugs gehalten wird.

6. Lastenträger nach Anspruch 3,
**dadurch gekennzeichnet,**
daß auf der zweiten Querstrebe (2') ein Gleitstein (14) längs der Querstrebe (2') verschiebbar und in verschiedenen Verschiebestellungen arretierbar gelagert ist und daß an dem Gleitstein (14) über ein Drehgelenk (15) mit etwa parallel zur Fahrtrichtung liegender Schwenkachse verschwenkbar eine Versteifungsstange (16) angelenkt ist, die an ihrem freien Ende eine Halteklemme (17) zur Befestigung eines vom Lastenträger aufgenommenen Zweirades (13) trägt.

7. Lastenträger nach Anspruch 6,
**dadurch gekennzeichnet,**
daß die Versteifungsstange (16) L-förmig ausgebildet ist, wobei der lange Schenkel (18) mit seinem freien Ende an dem Drehgelenk (15) angeschlagen ist und die Halteklemme (17) am kurzen Schenkel (19), der nach hinten ragt, befestigt ist.

8. Lastenträger nach Anspruch 7,
**dadurch gekennzeichnet,**
daß der lange Schenkel (18) der L-förmigen Stange aus zwei ineinander verschiebbaren Rohren gebildet ist und die in unterschiedlichen Auszugslängen gegeneinander fixierbar sind.

9. Lastenträger nach Anspruch 6,
**dadurch gekennzeichnet,**
daß die Halteklemme (17) um eine in Fahrtrichtung verlaufende Achse verschwenkbar ist.

10. Lastenträger nach Anspruch 1,
**dadurch gekennzeichnet,**
daß am Heckboden des Fahrzeugs ein wannenförmiger, den Lastenträgers in Ruhestellung (5) umgebender Spritzschutz (20) angebracht ist.

11. Lastenträger nach Anspruch 1,
**dadurch gekennzeichnet,**
daß die Querstrebe (2) zumindest bereichsweise geradlinig ausgebildet ist und daß in diesem Bereich die Trägerenden (7) in einer Gleitführung (8) verschiebbar angelenkt sind.

## Claims

1. Load carrier for vehicles, for transporting bulky articles, which is secured on the tail (1) of the vehicle and is formed by at least two beams (3) connected by at least one cross-strut (2), the cross-strut (2) being provided with means for securing the load to be carried and the beams (3) being inserted into holding tubes (4) extending in the longitudinal direction at the tail (1) of the vehicle, characterised by the following features jointly:
- the beams (3), which are angled in the end region, are displaceable by a defined amount in the longitudinal direction in the holding tubes (4), between two different end positions - a rest position (5) in which they are under the vehicle and a use position (6) in which they project beyond the tail (1) - , fixable in the end positions and mounted so as to be pivotable, in each case about the axis of the holding tube, likewise between two different end positions,
- the angled ends (7) of the beams (3) are swivellably articulated on the cross-strut (2),
- in the extended condition - the use position (6) - the beams (3) project beyond the tail (1) of the vehicle and are swivelled upwards with their angled end (7),
- in the rest position (5), the ends (7) of the beams (3) are swivelled into the plane defined by the holding tubes (4) and the beams are pushed into the holding tubes (4) to such an extent that the rear edge of the load carrier is flush with or in front of the rear end of the vehicle.

2. Load carrier according to Claim 1, characterised in that the bending angle (α) of the beam (3) is 90°.

3. Load carrier according to Claim 2, characterised in that each beam (3) comprises two beam parts (9, 10) which are inserted one inside the other, can be rotated relative to one another and are fixed axially relative to one another, the outer beam parts (9) being displaceable in the holding tube (4) and being mutually reinforced at the rearward end by a second cross-strut (2').

4. Load carrier according to Claim 3, characterised in that the second cross-strut (2') is additionally reinforced at both ends by in each case one diagonal strut (11) connected to the cross-strut (2') and the associated outer beam part (9).

5. Load carrier according to Claim 3, characterised in that a holding device (12) for at least one bicycle (13) is attached to the cross-strut (2), by which device the bicycle (13) is held transversely to the direction of travel of the vehicle.

6. Load carrier according to Claim 3, characterised in that a slide (14) is mounted on the second cross-strut (2') in a manner which allows it to be displaced along the cross-strut (2') and locked in various displacement positions and in that a reinforcing rod (16) which, at its free end, bears a holding clamp (17) for securing a bicycle (13) taken up by the load carrier is articulated on the slide (14) in a swivellable manner via a swivel joint (15) with a swivelling axis approximately parallel to the direction of travel.

7. Load carrier according to Claim 6, characterised in that the reinforcing rod (16) is of L-shaped design, the long limb (18) being attached by its free end to the swivel joint (15) and the holding clamp (17) being secured on the short limb (19), which projects rearwards.

8. Load carrier according to Claim 7, characterised in that the long limb (18) of the L-shaped rod is formed by two tubes displaceable one inside the other which can be fixed relative to one another at different lengths of extension.

9. Load carrier according to Claim 6, characterised in that the holding clamp (17) is swivellable about an axis extending in the direction of travel.

10. Load carrier according to Claim 1, characterised in that a trough-shaped spray guard (20) surrounding the load carrier in the rest position (5) is attached to the base of the tail of the vehicle.

11. Load carrier according to Claim 1, characterised in that the cross-strut (2) is of rectilinear design, at least in a certain area, and in that, in this area, the ends (7) of the beams are articulated displaceably in a slideway (8).

## Revendications

1. Porte-bagages pour véhicules, pour le transport de produits encombrants, fixé à la partie arrière (1) du véhicule et constitué d'au moins deux longerons (3) reliés à au moins une traverse (2), la traverse (2) étant pourvue de moyens de fixation de la charge à porter et les longerons (3) étant enfichés dans des tubes-support (4) s'étendant dans la direction longitudinale à l'arrière (1) du véhicule, caractérisé par l'ensemble des caractéristiques ci-après :
- les longerons (3), qui sont coudés dans la zone d'extrémité, sont déplaçables dans les tubes-support (4), d'une distance définie, dans la direction longitudinale, entre deux positions finales différentes
- une position de repos (5) se trouvant sous le véhicule et une position d'utilisation (6) sortant de l'arrière (1) -, sont fixables dans des positions finales et sont chacun montés à rotation autour de l'axe de tubes-support, également entre deux positions finales différentes,
- les extrémités (7) coudées des longerons (3) sont articulées, de façon à permettre un pivotement sur la traverse (2),
- les longerons (3) ressortent, à l'état déployé - position d'utilisation (6)
- sur l'arrière (1) du véhicule et sont tournés vers le haut par leur extrémité (7) coudée,
- en position de repos (5) les longerons (3) sont tournés, par leurs extrémités de longeron (7), dans le plan défini par les tubes-support (4), et les longerons sont rétractés par coulissement dans les tubes-support (4), d'une distance faisant que l'arête arrière du porte-bagages vient en affleurement avec, ou devant, l'extrémité arrière du véhicule.

2. Porte-bagages selon la revendication 1,
caractérisé en ce que
l'angle de coudage (α) du longeron (3) est de 90°.

3. Porte-bagages selon la revendication 2,
caractérisé en ce que
chaque longeron (3) est constitué de deux parties de longeron (9, 10) enfichées l'une dans l'autre, pouvant tourner l'une par rapport à l'autre et fixées axialement l'une par rapport à l'autre, les parties de longeron (9) situées à l'extérieur pouvant être déplacées en translation dans le tube-support (4) et leur liaison être rigidifiée l'une par rapport à l'autre à leur extrémité arrière par une deuxième traverse (2').

4. Porte-bagages selon la revendication 3,
caractérisé en ce que
la deuxième traverse (2') est rigidifiée aux deux extrémités, en plus, chaque fois au moyen d'une contrefiche de triangulation (11) reliée à la traverse (2'), respectivement à la partie de longeron (9) extérieure afférente.

5. Porte-bagages selon la revendication 3,
caractérisé en ce qu'
un dispositif-support (12), destiné à au moins une bicyclette (13), est monté sur la traverse (2), dispositif-support (12) au moyen duquel la bicyclette (13) est maintenue transversalement par rapport à la direction de roulement du véhicule.

6. Porte-bagages selon la revendication 3,
caractérisé en ce que
sur la deuxième traverse (2') est monté un coulisseau (14), déplaçable en translation le long de la traverse (2') et pouvant être fixé en différentes positions de coulissement, et en ce que sur le coulisseau (14) est articulée, de façon à permettre un pivotement, par l'intermédiaire d'une articulation tournante (15) ayant un axe de pivotement situé à peu près parallèlement à la direction de roulement, une tige de rigidification (16) qui porte à son extrémité libre une pince de maintien (17) destinée à la fixation d'une bicyclette (13) supportée par le porte-bagages.

7. Porte-bagages selon la revendication 6,
caractérisé en ce que
la tige de rigidification (16) est en forme de L, la branche longue (18) étant attaché par son extrémité libre sur l'articulation (15) et la pince de maintien (17) étant fixée sur la branche courte (19) qui fait saillie vers l'arrière.

8. Porte-bagages selon la revendication 7,
caractérisé en ce que
la branche longue (18) de la tige en L est constituée de deux tubes, pouvant coulisser l'un dans l'autre et pouvant être fixés l'un par rapport à l'autre en des positions de déploiement de longueurs différentes.

9. Porte-bagages selon la revendication 6,
caractérisé en ce que
la pince de maintien (17) est susceptible de pivoter autour d'un axe s'étendant dans la direction de roulement.

10. Porte-bagages selon la revendication 1,
caractérisé en ce qu'
une protection anti-projections (20) en forme d'auge, entourant le porte-bagages en position de repos (5), est montée sur le fond arrière du véhicule.

11. Porte-bagages selon la revendication 1,
caractérisé en ce que
la traverse (2) est réalisée rectiligne au moins dans une zone et en ce que, dans cette zone, les extrémités de longeron (7) sont articulées de façon à pouvoir coulisser dans un guide de coulissement (8).
